# EUROPEAN PATENT APPLICATION

(11) **EP 4 116 758 A1**
(43) Date of publication of application: **11.01.2023**
(21) Application number: 21918923.0
(22) Date of filing: 16.08.2021
(51) Int. Cl.: G02B 27/01

(54) **OPTICAL MACHINE DEVICE FOR HEAD-MOUNTED DISPLAY APPARATUS, AND OPTICAL MACHINE MODULE**

(30) Priority: 15.01.2021 CN 202120119910 U
(71) Applicant: Guangzhou Shixiang Technology Co., Ltd., Guangzhou, Guangdong 510530 (CN)
(72) Inventor: LI, Li, Guangzhou, Guangdong 510530 (CN)
(74) Representative: Grünecker Patent- und Rechtsanwälte PartG mbB
(86) International application number: PCT/CN2021/112795
(87) International publication number: WO 2022/151731

(57) **Abstract**

An optical device for a head-mounted display apparatus comprises an optical lens assembly (10), a display unit (20), a lens (40) and a mounting base (30). The mounting base (30) is provided with a lens-mounting hole (312), and a side wall of the lens-mounting hole (312) includes a first side-surface (312a) and a second side-surface (312b) which are opposite, and a third side-surface (312c) and a fourth side-surface (312d) which are opposite. The lens (40) is installed into the lens-mounting hole (312), the first side-surface (312a) and the second side-surface (312b) are respectively clamped to two sides of the lens (40), a gap is formed between the third side-surface (312c) and the lens (40), and a gap is formed between the fourth side-surface (312d) and the lens (40). The lens-mounting hole (312) is clamped to the lens (40) through the first side-surface (312a) and the second side-surface (312b). While the lens (40) is firmly mounted, there are gaps between the third side-surface (312c) and the lens (40) and between the fourth side-surface (312d) and the lens (40), so that image light which passes through the lens (40) and then is projected onto a side surface of the lens-mounting hole (312) can be reduced, thereby reducing the generation of stray light, and thus weakening the impact of the stray light on human eyes.

## Description

The present disclosure claims the priority of a Chinese patent application with the Application No. 202120119910.7 and the title of "OPTICAL DEVICE AND OPTICAL MODULE FOR HEAD-MOUNTED DISPLAY APPARATUS", which is filed to CNIPA on January 15, 2021, and the entire contents of the above application are incorporated in the present disclosure by reference.

### FIELD

The present disclosure relates to the field of head-mounted display apparatuses, and in particular, to an optical device for head-mounted display apparatus and an optical module for head-mounted display apparatus.

### BACKGROUND

By using optical devices to transmit image information to user's eyes, head-mounted display apparatuses can achieve different effects such as virtual reality (VR), augmented reality (AR), and mixed reality (MR).

The optical device in the related art generally includes a display screen, a lens, an optical lens and a mounting bracket, and the display screen, the lens and the optical lens are all mounted on the mounting bracket, wherein the lens is usually installed in a hole of the mounting bracket, and is in close contact with a side wall of the hole. An image transmission process of the optical device is as follows: the image light emitted by the display screen passes through the lens and then hits the optical lens, and after the reflection and transmission of the optical lens, is emitted to the human eyes. However, in this process, since the lens is in close contact with the hole of the mounting bracket, a part of the image light will pass through the lens and then hit the side wall of the hole, and this position will be illuminated by the image light, and then stray light is generated, which will hit the optical lens as well, and is emitted to the human eyes after the reflection and transmission of the optical lens. Too much stray light will cause to produce band-shaped bright lines or light spots on an edge of the image when the user viewing the image, which affects the viewing experience.

### SUMMARY

The purpose of the present disclosure is to provide an optical device for a head-mounted display apparatus so as to solve shortcomings and deficiencies in the prior art.

An optical device for a head-mounted display apparatus according to the present disclosure, comprising: an optical lens assembly, a display unit, a lens, and an mounting base for mounting the optical lens assembly, the display unit, and the lens.

The mounting base is provided with a lens-mounting hole, and a side wall of the lens-mounting hole includes a first side-surface and a second side-surface which are opposite, and a third side-surface and a fourth side-surface which are opposite.

The lens is installed into the lens-mounting hole, the first side-surface and the second side-surface are respectively clamped to two sides of the lens, a gap is formed between the third side-surface and the lens, and a gap is formed between the fourth side-surface and the lens.

The display unit is arranged above the lens, and is configured to emit image light that hits the lens. The optical lens assembly is arranged below the lens, and is configured to propagate the image light transmitted through the lens to a human eye.

Compared with the related art, the lens-mounting hole of the present disclosure is clamped to the lens through the first side-surface and the second side-surface, therefore while the lens is firmly installed, there are gaps between the third side-surface and the fourth side-surfaces and the lens, which can reduce the image light which passes through the lens and then is projected onto the side-surface of the lens-mounting hole, thereby reducing the generation of stray light, and thus reducing the impact of stray light on the human eyes.

In an embodiment, the third side-surface is arranged to tilt upward, and the fourth side surface is arranged to tilt upward. In this case, a part of the stray light can be reflected above the lens by the third side-surface or the fourth side-surface and then eliminated.

In an embodiment, the third side-surface is arranged to tilt downward and the fourth side-surface is arranged to tilt downward. In this case, a part of the stray light can be reflected under the lens by the third side-surface or the fourth side-surface and is far away from a display area on the optical lens assembly that can be seen by the human eye. Moreover, this arrangement, that is the third side-surface being inclined downward and the fourth side-surface being inclined downward, also minimizes the reflection of image light, thereby eliminating the interference of stray light on the image and the impact of stray light on the human eye.

In an embodiment, the optical lens assembly includes a first optical lens and a second optical lens. The mounting base includes a base plate and two side plates respectively extending downward from left and right sides of the base plate.

Front sides of the base plate and the two side plates form a first lens-mounting portion for mounting the first optical lens, and rear sides of the base plate and the two side plates form a second lens-mounting portion for mounting the second optical lens.

The display unit is mounted on the base plate, and the lens-mounting hole is arranged on the base plate. The image light emitted by the display unit passes through the lens, and then is projected onto the second optical lens at a first angle and reflected by the second optical lens to the first optical lens, the first optical lens reflects the image light to the second optical lens, and the image light is projected onto the second optical lens at a second angle lens, and transmitted through the second optical lens.

The front and rear sides of the two side plates form a certain angle with each other, so that the first optical lens and the second optical lens form a certain angle after installation, as long as the first optical lens and the second optical lens can realize the image light emitted by the display unit can enter the human eye through a certain optical path. Therefore, the image light emitted by the display unit can pass through the lens and then be projected onto the second optical lens at a first angle and reflected by the second optical lens to the first optical lens, the first optical lens reflects the image light to the second optical lens, the image light is projected onto the second optical lens at a second angle, and is transmitted through the second optical lens. When the human eye is located on a side of the second optical lens away from the first optical lens, the image light transmitted through the second optical lens will enter the human eye and be seen by the human eye.

In an embodiment, the base plate further includes a protruding portion extending downward from the rear side of the base plate, and the protruding portion and the rear sides of the two side plates form the second lens-mounting portion. The structure facilitates fixing the second optical lens.

In an embodiment, a concave structure for eliminating stray light is provided on a surface of the protruding portion facing the lens, so as to prevent image light from irradiating the protruding portion to produce stray light projected onto the optical lens assembly.

In an embodiment, a light-absorbing layer or a light-absorbing structure is provided on the surfaces of both the third side-surface and the fourth side-surface. The light-absorbing layer or the light-absorbing structure can absorb light, which can further reduce the reflection of image light and eliminate the stray light on the third side-surface and the fourth side-surface.

In an embodiment, the light-absorbing structure is microstructures distributed in an array, and the microstructures include at least one structure selected from a group consisting of a triangle, a parallelogram, a trapezoid, and a rectangle. In this arrangement, the microstructures distributed in the array can reflect light multiple times, and can absorb light once during each reflection process, and can basically eliminate or even completely eliminate the light after multiple reflections.

In an embodiment, the light-absorbing layer includes a black light-absorbing coating or a fluff light-absorbing coating. The black light-absorbing coating or the fluff light-absorbing coating can absorb light, reduce the reflection of light, and reduce the impact of stray light.

In an embodiment, the display unit includes a display screen and a fixing frame. The display screen is wrapped by the fixing frame. One end of the fixing frame covers the gap between the third side-surface and the lens, and the other end covers the gap between the fourth side-surface and the lens. Therefore, it is possible to prevent remaining light from entering the optical lens assembly from the gap between the third side-surface and the lens, or from the gap between the fourth side-surface and the lens, to cause the interference on imaging.

In an embodiment, the top of the housing is provided with a mounting opening, and the mounting opening is provided with a sealing cover. The sealing cover may be installed in cooperation with the mounting opening through screws so as to play a dust-proof role.

In an embodiment, the first side-surface is provided with a first portion and a second portion which are connected with each other, the first portion and the lens are installed and connected in cooperation with each other, and the second portion is provided with a concave structure for eliminating stray light, thereby playing a role in eliminating stray light.

The present disclosure further provides an optical module for a head-mounted display apparatus, comprising: two optical devices of the present disclosure, and a connecting portion.

The two optical devices are symmetrically arranged along the connecting portion and connected through the connecting portion.

Compared with the related art, the optical module can realize the effect of binocular augmented reality or binocular virtual reality, has a firm structure, and can effectively reduce the generation of stray light.

### BRIEF DESCRIPTION OF THE DRAWINGS

Fig. 1 is a schematic diagram of a side structure of an optical device provided by an embodiment of the present disclosure.
Fig. 2 is a schematic diagram of a top-view structure of a mounting base provided by an embodiment of the present disclosure.
Fig. 3 is a schematic diagram of a top-view structure of a mounting base after a lens is installed provided by an embodiment of the present disclosure.
Fig. 4 is a schematic diagram of a front-view structure of an optical device in the related art.
Fig. 5 is a schematic diagram of a front-view structure of an optical device provided by an embodiment of the present disclosure.
Fig. 6 is a schematic diagram of a top-view structure of another mounting base provided by an embodiment of the present disclosure.
Fig. 7 is a schematic diagram of a top-view structure of another mounting base after the lens is installed provided by an embodiment of the present disclosure.
Fig. 8 is a schematic diagram of a side-view structure of an optical device in the related art.
Fig. 9 is a schematic diagram of a side-view structure of another optical device provided by an embodiment of the present disclosure.
Fig. 10 is a schematic diagram of a front-view structure of an optical device provided by an embodiment of the present disclosure.
Fig. 11 is a schematic diagram of a front-view structure of an optical device provided by an embodiment of the present disclosure.
Fig. 12 is a schematic diagram of a structure of a light-absorbing structure provided by an embodiment of the present disclosure.
Fig. 13 is a schematic diagram of a front-view structure of a mounting base provided by an embodiment of the present disclosure.
Fig. 14 is an exploded view of a front side of an optical device provided by an embodiment of the present disclosure.
Fig. 15 is an exploded view of a rear side of an optical device provided by an embodiment of the present disclosure.
Fig. 16 is a schematic diagram of a side-view structure of an optical device provided by an embodiment of the present disclosure.
Fig. 17 is a perspective view of an optical module provided by an embodiment of the present disclosure.

### DESCRIPTION OF THE PREFERRED EMBODIMENTS

The contents of International Publication WO2022151731A1, hereinafter referred to as Prior Application may be cited in the present application by reference (Incorporation by Reference). One of the inventors of Prior Application, which was filed by the present applicant, is the inventor of the present application.

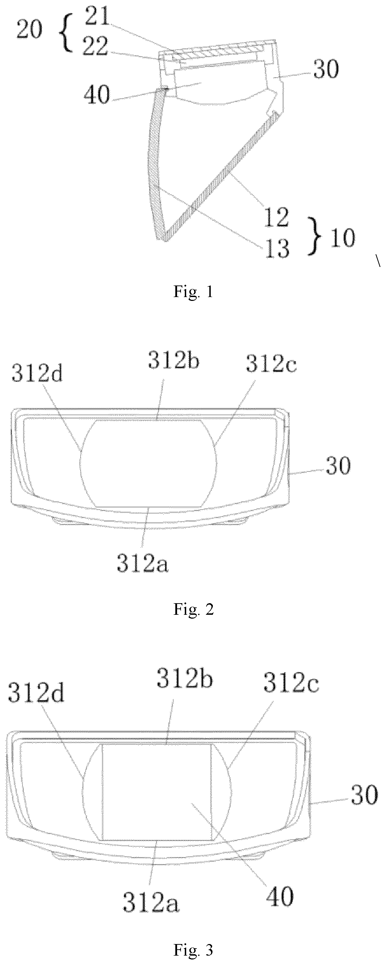

Referring to Fig. 1, this embodiment provides an optical device for a head-mounted display apparatus, including an optical lens assembly 10, a display unit 20, a lens 40, and an mounting base 30 for mounting the optical lens assembly 10, the display unit 20 and the lens 40. Therein, the display unit 20 is arranged above the lens 40, and is configured to emit image light that hits the lens 40. The optical lens assembly 10 is arranged below the lens 40, and is configured to propagate the image light transmitted through the lens 40 to human eyes. The optical device for head-mounted display apparatus in this embodiment is mainly used for a head-mounted display apparatus for augmented reality, for example, AR glasses.

In this embodiment, the optical lens assembly 10 includes a first optical lens 13 and a second optical lens 12. In an embodiment, the first optical mirror 13 is a concave mirror, and the second optical mirror 12 is a flat mirror. In other embodiments, the first optical mirror 13 can be a curved mirror so as to reflect a part of the light while transmitting a part of the light. The second optical lens 12 can be a beam splitter so as to reflect a part of the light while transmitting a part of the light. The image light emitted by the display unit 20 passes through the lens 40, and then is projected onto the second optical lens 12 at a first angle and reflected by the second optical lens 12 to the first optical lens 13. The first optical lens 13 reflects the image light so as to project it onto the second optical lens 12 at a second angle, and transmit it through the second optical lens 12, and finally enter the human eyes.

The mounting base 30 is provided with a lens-mounting hole 312, and the lens-mounting hole 312 is configured to mount the lens 40. The present disclosure reduces the generation of stray light by arranging the lens-mounting hole 312, thereby reducing the interference of the stray light on the image and the impact of the stray light on the human eyes. Referring to Fig. 2, in an embodiment, the side wall of the lens-mounting hole 312 includes a first side-surface 312a and a second side-surface 312b which are opposite, and a third side-surface 312c and a fourth side-surface 312d which are opposite. The first side-surface 312a, the second side-surface 312b, the third side-surface 312c and the fourth side-surface 312d enclose the lens-mounting hole 312.

Referring to Fig. 3, when the lens 40 is installed into the lens-mounting hole 312, the first side-surface 312a and the second side-surface 312b are respectively clamped to two sides of the lens 40. Sides of the first side-surface 312a and the second side-surface 312b facing the lens 40 can be configured as a slot structure, so that the lens 40 is firmly clamped by the first side-surface 312a and the second side-surface 312b.

Sequentially referring to Fig. 3, when the lens 40 is installed into the lens-mounting hole 312, the third side-surface 312c forms a gap with one of the other two sides of the lens 40, and the fourth side-surface 312d forms a gap with the other of the other two sides of the lens 40. That is, a certain distance exists between the lens 40 and a part of the side surfaces of the lens-mounting hole 312.

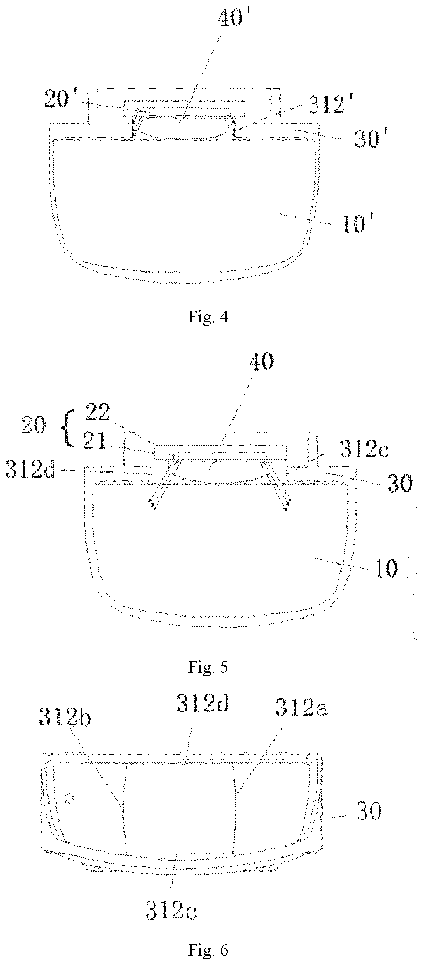

Referring to Figs. 2 and 3, in an embodiment, as a first arranging method, the first side-surface 312a and the second side-surface 312b of the lens-mounting hole 312 are front and rear side-surfaces, and the third side-surface 312c and the fourth side-surface 312d of the lens-mounting hole 312 are left and right side-surfaces. For example, in this arranging method, the first side-surface 312a is the front side-surface, which is clamped to a front side of the lens 40; the second side-surface 312b is the rear side-surface, which is clamped to a rear side of the lens 40; the third side-surface 312c is the left side-surface, which forms a gap with a left side of the lens 40, that is, there is an interspace between the third side-surface 312c of the lens-mounting hole 312 and the lens 40; the fourth side-surface 312d is the right side-surface, which forms a gap with the right side of the lens 40, that is, there is also an interspace between the fourth side-surface 312d of the mounting hole 312 and the lens 40. Referring to Fig. 4, straight lines with arrows in the figure are image light, it can be seen that in the related art, the optical device also includes a lens 40', a display unit 20', an optical lens assembly 10' and a mounting base 30' for mounting the lens 40, the display unit 20' and the optical lens assembly 10'. The mounting base 30' is provided with a lens-mounting hole 312', wherein the lens-mounting hole 312' is close to the lens 40', causing that more image light emitted by the display unit 20' is projected onto a side surface of the lens-mounting hole 312', which leads to generation of more stray light. Referring to Fig. 5 and comparing with Fig. 4, straight lines with arrows in the figure are the image light. It can be understood that when there is a gap between the third side-surface 312c of the lens-mounting hole 312 and the lens 40, or between the fourth side-surface 312d of the lens-mounting hole 312 and the lens 40, a part of the image light that would be irradiated on the third side-surface 312c and the fourth side-surface 312d can be directly propagated to the optical lens assembly 10, and this part of the image light will not generate stray light on the third side-surface 312c and the fourth side-surface 312d, so that it is possible to effectively reduce the reflection of the image light irradiated on the third side-surface 312c and the fourth side-surface 312d, thereby reducing the generation of stray light on the left and right sides of the lens-mounting hole 312, and thus reducing the interference of the stray light on the image and the impact of the stray light on the human eyes.

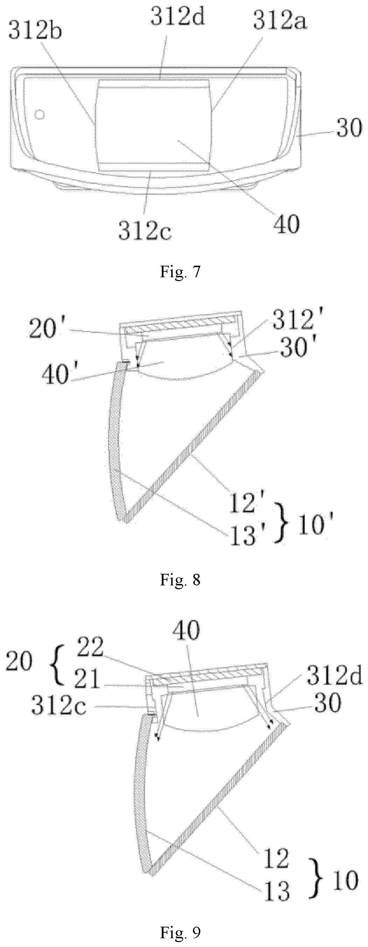

Referring to Figs. 6 and 7, as a second arranging method, the first side-surface 312a and the second side-surface 312b of the lens-mounting hole 312 are left and right side-surfaces, and the third side-surface 312c and the fourth side-surface 312d of the lens-mounting hole 312 are front and rear side-surfaces. For example, in this arranging method, the first side-surface 312a is the left side-surface, which is clamped to a left side of the lens 40; the second side-surface 312b is the right side-surface, which is clamped to a right side of the lens 40; the third side-surface 312c is a front side-surface, which forms a gap with a front side of the lens 40, that is, there is an interspace between the third side-surface 312c and the lens 40; the fourth side-surface 312d is the rear side-surface, which forms a gap with a rear side of the lens 40, that is, there is an interspace between the fourth side surface 312d with the lens 40. Referring to Fig. 8, straight lines with arrows in the figure are image light. It can be seen that in the related art, the optical device also includes a lens 40', a display unit 20', an optical lens assembly 10' and a mounting base 30' for mounting the lens 40', the display unit 20', the optical lens assembly 10'. The mounting base 30' is provided with a lens-mounting hole 312', wherein the lens-mounting hole 312' is close to the lens 40', which will lead to more image light emitted by the display unit 20' is projected onto a side surface of the lens-mounting hole 312', thereby causing generation of more stray light. Referring to Fig. 9 and comparing with Fig. 8, straight lines with arrows in the figure are image light. It can be understood that, similar to the principle of the first arranging method, the second arranging method can also achieve the effect of reducing stray light. The difference is that: in the second arranging method, the first side-surface 312a is the left side-surface, the second side-surface 312b is the right side-surface, the third side-surface 312c is the front side-surface, and the fourth side-surface 312d is the rear side-surface, which can effectively reduce the reflection of image light, thereby reducing the generation of stray light on the front and rear side-surfaces of the lens-mounting hole 312.

It is not difficult to understand that both the lens-mounting hole 312 of the first arranging method and the lens-mounting hole 312 of the second arranging method can reduce the generation of stray light on the lens-mounting hole 312. In this embodiment, the optical device uses the lens-mounting hole 312 of the first arranging method.

The lens-mounting hole 312 of the present disclosure is clamped to the lens 40 through the first side-surface 312a and the second side-surface 312b. While the lens 40 is firmly mounted, there are gaps between the third side-surface 312c and the lens 40, and between the fourth side-surface 312d and the lens 40, which can reduce the image light which passes through the lens 40 and then hits the side surfaces of the lens-mounting hole 312, reduce the reflection of the image light from the side surfaces of the lens-mounting hole 312, thereby reducing the generation of stray light, and thus reducing the impact of stray light on the human eyes.

Although there are certain gaps between the third side-surface 312c and the lens 40, and between the fourth side-surface 312d and the lens 40, a small amount of image light still passes through the lens 40 and then hits the third side-surface 312c or the fourth side-surface 312d, thereby generating stray light.

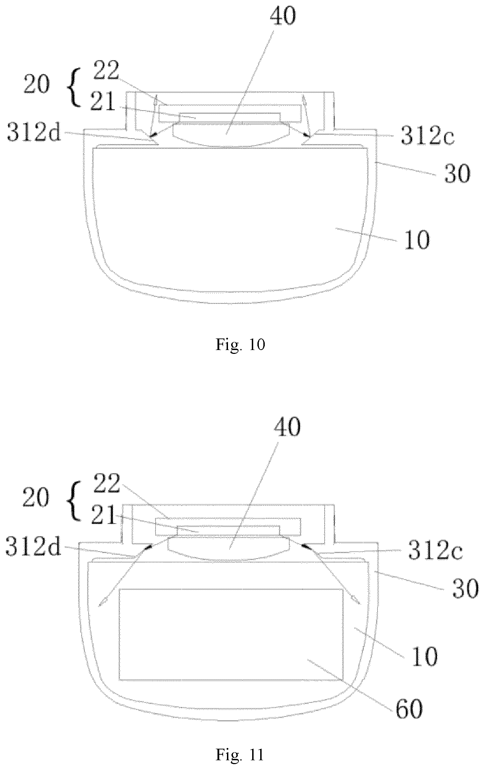

Therefore, in order to further reduce the stray light of the third side-surface 312c and the fourth side-surface 312d, the third side-surface 312c and the fourth side-surface 312d can be arranged obliquely, so that a reflection direction of the image light irradiating to the third side-surface 312c or the fourth side-surface 312d can be changed (which is equivalent to changing the propagation direction of the stray light), so that the stray light is projected onto other positions, without affecting the human eyes to observe the image. Referring to Fig. 10, a straight line with a solid arrow in the figure is image light, and a straight line with a hollow arrow is stray light. Optionally, the third side-surface 312c is arranged to tilt upward, and the fourth side-surface 312d is arranged to tilt upward. Upward refers to a direction from the lens 40 to the display unit 20. At this time, a part of the stray light can be reflected to the above of the lens 40 by the third side-surface 312c or the fourth side-surface 312d and then eliminated. Similarly, referring to Fig. 11, a straight line with a solid arrow in the figure is image light, and a straight line with a hollow arrow is stray light. Optionally, the third side-surface 312c is arranged to tilt downward, and the fourth side-surface 312d is arranged to tilt downward. Downward refers to a direction from the lens 40 to the optical lens assembly 10. At this time, a part of the stray light can be reflected under the lens 40 by the third side-surface 312c or the fourth side-surface 312d and be far away from a display area 60 on the optical lens assembly 10 that can be seen by the human eyes. The arranging method that the third side-surface 312c is arranged to tilt downward and the fourth side-surface 312d is arranged to tilt downward also minimizes the reflection of image light, thereby eliminating the interference of stray light on the image and the impact of stray light on human eyes.

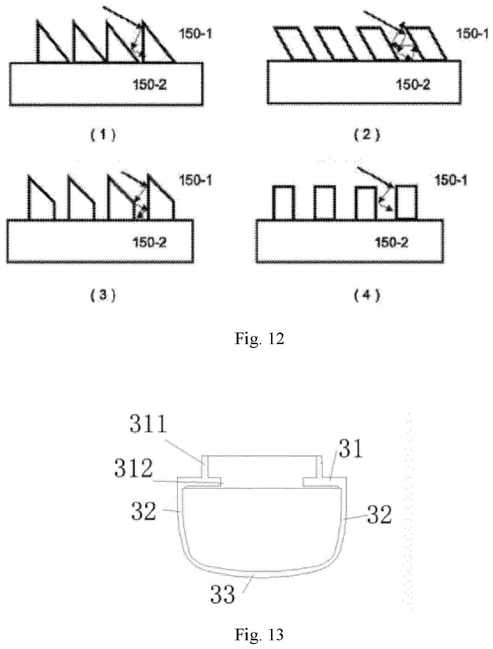

Optionally, a light-absorbing layer or a light-absorbing structure is provided on surfaces of both the third side-surface 312c and the fourth side-surface 312d. The light-absorbing layer or the light-absorbing structure can absorb light, which can further reduce the reflection of the image light, and eliminate stray light on the third side-surface 312c and the fourth side-surface 312d. In an embodiment, the light-absorbing structure may be microstructures distributed in an array, and a depression is formed between two microstructures. Optionally, the microstructures include at least one structure selected from a group consisting of a triangle, a parallelogram, a trapezoid, and a rectangle. Referring to Fig. 12, a microstructure shown in (1) of Fig. 12 has a shape of a triangle, a microstructure shown in (2) of Fig. 12 has a shape of a parallelogram, a microstructure shown in (3) of Fig. 12 has a shape of a trapezoid, and a microstructure shown in (4) of Fig. 12 has a shape of a rectangular. The array distribution of the microstructures can also be specified, and the array distribution of different microstructures can be different. For example, there are 10-micrometer-gaps in an array distribution of the triangular structure, that is, a distance between two adjacent triangular structures is 10 micrometers. There are 20-micrometer-gaps in an array distribution of the parallelogram structure, that is, a distance between two adjacent parallelogram structures is 20 micrometers. In this arrangement, the microstructures distributed in the array can reflect light multiple times, and can absorb light once during each reflection process, and can basically eliminate or even completely eliminate the light after multiple reflections. In addition, the light-absorbing layer in this embodiment includes a black light-absorbing coating or a fluff light-absorbing coating. The black light-absorbing coating or the fluff light-absorbing coating both can absorb light, which reduces the reflection of light, and reduces the impact of stray light.

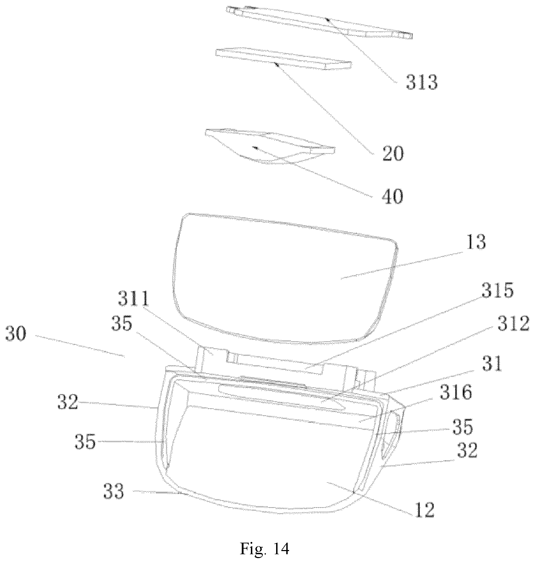

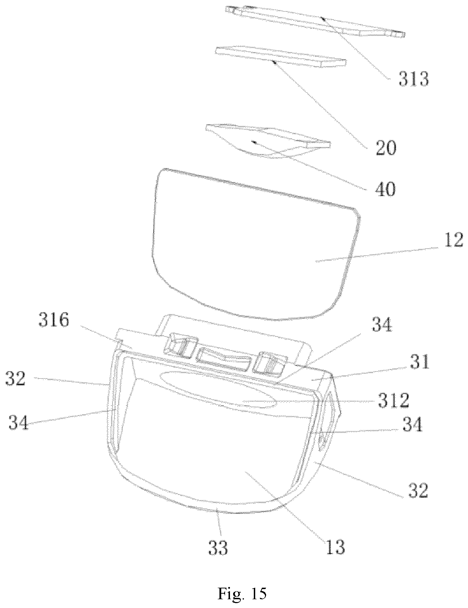

Referring to Figs. 13-16, in this embodiment, the mounting base 30 includes a base plate 31 and two side plates 32 respectively extending downward from the left and right sides of the base plate 31. Front sides of the base plate 31 and the two side plates 32 form a first lens-mounting portion for mounting the first optical lens 13, and rear sides of the base plate 31 and the two side plates 32 form a second lens-mounting portion for mounting the second optical lens 12. The first lens-mounting portion and the second lens-mounting portion may be grooves or other structures for mounting lenses. In an embodiment, the mounting base 30 further includes a beam 33, the beam 33 connects bottoms of the two side plates 32, and the bottoms of the two side plates 32 are ends of the two side plates 32 away from the base plate 31. The requirements for lens positions of the optical device are relatively high. In order to prevent the deformation of the two side plates 32 during use, the two side plates 32 are connected through a beam 33 in this embodiment. The base plate 31, the two side plates 32 and the beam 33 enclose together and form a frame, which can increase the strength of the two side plates 32, so that the strength of the entire mounting base 30 can be higher, and the lens can be fixed better. The optical device in this embodiment needs to be installed in the mirror frame of the head-mounted display apparatus. Therefore, connecting lugs may also be provided on the base plate 31 to be connected with a lens frame.

The display unit 20 is mounted on the base plate 31, and the lens-mounting holes 312 are provided on the base plate 31. The first optical lens 13 is mounted on the first lens-mounting portion, the second optical lens 12 is mounted on the second lens-mounting portion, and the front and rear sides of the two side plates 32 form a certain angle with each other, so that the first optical lens 13 and the second optical lens 12 forms a certain included angle after installation, as long as the first optical lens 13 and the second optical lens 12 can realize that the image light emitted by the display unit 20 can enter the human eyes through a certain optical path. Therefore, the image light emitted by the display unit 20 can pass through the lens 40, and then is projected onto the second optical lens 12 at a first angle and reflected by the second optical lens 12 to the first optical lens 13, the first optical lens 13 reflects the image light to the second optical lens 12, and the image light is projected onto the second optical lens 12 at a second angle and transmitted through the second optical lens 12. When the human eyes are located on a side of the second optical lens 12 away from the first optical lens 13, the image light transmitted through the second optical lens 12 will enter the human eyes and be seen by the human eyes.

In this embodiment, the first lens-mounting portion is a first groove 35 provided on the front side of the base plate 31 and the front sides of the two side plates 32. The second lens-mounting portion is a second groove 34 provided on the rear side of the base plate 31 and the rear sides of the two side plates 32. The first optical lens 13 is clamped into the first groove 35, and the second optical lens 12 is clamped into the second groove 34. The first groove 35 and the second groove 34 are respectively provided on the base plate 31 and the two side plates 32. The first optical lens 13 can realize three-point location through three parts (the base plate 31 and the two side plates 32), so as to be stably mounted, and the second optical lens 12 is the same. In an embodiment, the two side edges of the first optical lens 13 are respectively clamped into the first grooves 35 of the two side plates 32, and the top edge of the first optical lens 13 is clamped into the first grooves 35 of the base plate 31. Two side edges of the second optical lens 12 are respectively clamped into the second grooves 34 of the two side plates 32, and the top edge of the optical lens 12 is clamped into the second grooves 34 of the base plate 31.

The mounting base 30 of the present disclosure is easy to assemble and disassemble, and also ensures the stability of the assembly of each component, and can reduce the weight of the optical device. The beam 33 of the mounting base 30 connects the two side plates 32, so that the overall structure of the mounting base 30 is more stable, the two side plates 32 are not easily deformed, and the lens mounted on the mounting base 30 will not cause deviation of its optical path.

In an embodiment, the ends of the first optical lens 13 and the second optical lens 12 away from the base plate 31 abut against each other, so that the two optical lenses and the base plate 31 together form a structure similar to a triangle, and the two optical lenses can withstand greater shock. In addition, it is also possible to dispense glue at the abutting position of the two optical lenses so as to realize the sealing of the two optical lenses, which plays a dustproof effect, reduces the dispensing process and improves the productivity.

When installing the optical lens assembly 10 of the present disclosure, the first optical lens 13 can be clamped into the first grooves 35 of the base plate 31 and the two side plates 32, and then the second optical lens 12 can be clamped into the second grooves 34 of the base plate 31 and the two side plates 32. At the same time, the ends of the first optical lens 13 and the second optical lens 12 away from the base plate 31 abuts against each other to realize stable installation of the optical lenses. Next, sealant is filled at a position where the first optical lens 13 and the first groove 35 are clamped, and a position where the second optical lens 12 and the second groove 34 are clamped. Finally, sealant is filled at an abutting position of the first optical lens 13 and the second optical lens 12.

As an optional implementation approach, the base plate 31 further includes a housing 311 with an accommodating cavity extending from the upper side of the base plate 31, the bottom of the accommodating cavity of the housing 311 communicates with the lens-mounting hole 312, and the display unit 20 is mounted in the accommodating cavity of the housing 311. In an embodiment, the display unit 20 includes a display screen 21 and a fixing frame 22. The display screen 21 is configured to emit image light, and the fixing frame 22 is configured to fix the display screen 21. The display screen 21 is wrapped by the fixing frame 22, and the user can lock the fixing frame 22 in the accommodating cavity through screws. In addition, one end of the fixing frame 22 covers the gap between the third side-surface 312c and the lens 40, and the other end thereof covers the gap between the fourth side-surface 312d and the lens 40, which can prevent the remaining light from entering the optical lens assembly 10 from the gap between the third side-surface 312c and the lens 40, or the gap between the fourth side-surface 312d and the lens 40, thereby interfering with imaging. In this embodiment, the top of the housing 311 is provided with a mounting opening, which facilitates the installation of the display unit 20 through the mounting opening of the housing 311. In addition, the mounting opening is provided with a sealing cover 313. The sealing cover 313 can be installed in cooperation with the mounting opening through screws, so as to play a dust-proof role.

Since the display unit 20 is generally provided with cables for electrical connection with other electronic components, in an embodiment, a cable opening 315 is provided on the side wall of the housing 311. After the display unit 20 is installed into the accommodating cavity, its cables are led out through the cable opening 315 to be connected with other electronic components.

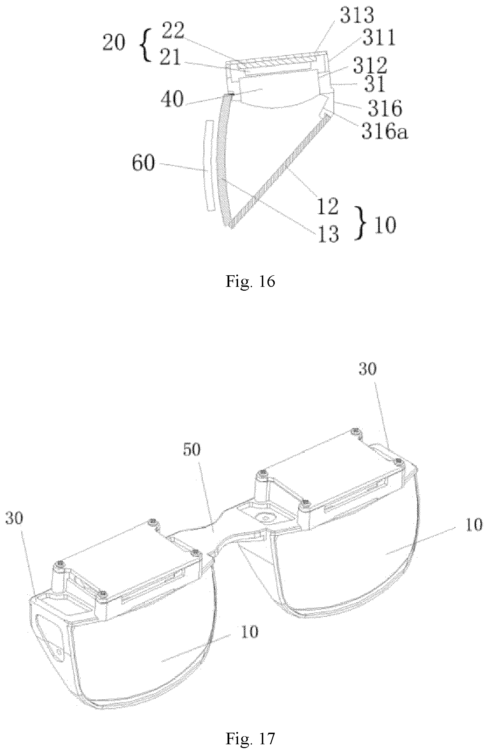

As an optional implementation approach, the base plate 31 in this embodiment may further include a protruding portion 316 extending downward from the rear side of the base plate 31, and the rear sides of the two side plates 32 and the protruding portion 316 form the second lens-mounting portion, the second groove 34 of the base plate 31 is located on the protruding portion 316, and this structure facilitates fixing the second optical lens 12. Sequentially referring to Fig. 16, in addition, in order to prevent the image light from irradiating the protruding portion 316 to cause stray light projected onto the optical lens assembly 10, a surface of the protruding portion 316 facing the lens 40 in this embodiment is provided with a concave structure for eliminating stray light. The concave structure includes at least one light-proof surface 316a, and the light-proof surface 316a is inclined upward, which prevents the image light from being reflected into the human eyes, thereby eliminating the interference of the stray light on the image and the impact of the stray light on the human eyes. Optionally, the light-proof surface 316a may also be provided with the above-mentioned light-absorbing layer or light-absorbing structure to further eliminate stray light.

As another optional implementation approach, the first side-surface 312a of the lens-mounting hole 312 is provided with a first portion and a second portion that are connected with each other, the first side-surface 312a is the rear side-surface, the first portion and the lens are installed and connected in cooperation with each other, and the second portion is provided with a concave structure for eliminating stray light. The concave structure of the second portion is similar to the concave structure of the protruding portion, and also plays a role of eliminating stray light.

The optical device of this embodiment can realize an effect of monocular augmented reality or virtual reality when used alone, and can realize an effect of binocular augmented reality or virtual reality when used together. In order to make the optical device work better when the two are used together, and the degree of coordination higher, referring to Fig. 17, the present disclosure further provides an optical module for a head-mounted display apparatus, which includes two optical devices of this embodiment, and a connecting portion 50. The two optical devices are symmetrically arranged along the connecting portion 50 and are connected through the connecting portion 50. The connecting portion 50 plays a role of connecting the two optical devices, and can be a connecting plate. In addition, the connecting portion 50 can be provided with a plurality of weight-reducing grooves to realize the light-weight of the optical module. The optical module can realize the effect of binocular augmented reality or binocular virtual reality, and has a firm structure.

In the description of the present disclosure, it should be understood that, orientations or positional relationships indicated by the terms "center", "longitudinal", "transverse", "above", "below", "front", "rear", "left", "right", "vertical", "horizontal", "top", "bottom", "inner", "outer", etc. are based on the orientations or positional relationships shown in the accompanying drawings, and are only for the convenience of describing the present disclosure and the simplification of the description, rather than indicating or implying that the device or element referred to must have a particular orientation, be constructed and operate in a particular orientation, and therefore should not be construed as a limitation on the present disclosure. In the description of the present disclosure, unless stated otherwise, "plurality" means two or more.

The above-mentioned embodiments only represent several embodiments of the present disclosure, and the descriptions thereof are relatively specific and detailed, but should not be construed as a limitation on the scope of the utility model patent. It should be pointed out that for those skilled in the art, without departing from the concept of the present disclosure, several modifications and improvements can be made, which all belong to the claimed scope of the present disclosure.

## Claims

1. An optical device for a head-mounted display apparatus, comprising:
an optical lens assembly, a display unit, a lens, and a mounting base for mounting the optical lens assembly, the display unit, and the lens; wherein
the mounting base is provided with a lens-mounting hole, and a side wall of the lens-mounting hole includes a first side-surface and a second side-surface which are opposite, and a third side-surface and a fourth side-surface which are opposite;
the lens is installed into the lens-mounting hole, the first side-surface and the second side-surface are respectively clamped to two sides of the lens, a gap is formed between the third side-surface and the lens, and a gap is formed between the fourth side-surface and the lens;
the display unit is arranged above the lens, and is configured to emit image light that hits the lens; the optical lens assembly is arranged below the lens, and is configured to propagate the image light transmitted through the lens to a human eye.

2. The optical device according to claim 1, wherein
the third side-surface is arranged to tilt upward, and the fourth side-surface is arranged to tilt upward.

3. The optical device according to claim 1, wherein
the third side-surface is arranged to tilt downward, and the fourth side-surface is arranged to tilt downward.

4. The optical device according to claim 1, wherein
the optical lens assembly includes a first optical lens and a second optical lens; the mounting base includes a base plate and two side plates respectively extending downward from left and right sides of the base plate;
the base plate and front sides of the two side plates form a first lens-mounting portion for mounting the first optical lens, and the base plate and rear sides of the two side plates form a second lens-mounting portion for mounting the second optical lens;
the display unit is mounted on the base plate, and the lens-mounting hole is arranged on the base plate; the image light emitted by the display unit passes through the lens, and then is projected onto the second optical lens at a first angle and reflected by the second optical lens to the first optical lens, the first optical lens reflects the image light to the second optical lens, and the image light is projected onto the second optical lens at a second angle and transmitted through the second optical lens.

5. The optical device according to claim 4, wherein the base plate further includes a protruding portion extending downward from a rear side of the base plate, and the protruding portion and the rear sides of the two side plates form the second lens-mounting portion.

6. The optical device according to claim 5, wherein a concave structure for eliminating stray light is provided on a surface of the protruding portion facing the lens.

7. The optical device according to claim 1, wherein a light-absorbing layer or a light-absorbing structure is provided on surfaces of both the third side-surface and the fourth side-surface.

8. The optical device according to claim 7, wherein the light-absorbing structure is microstructures distributed in an array, and the microstructures include at least one structure selected from a group consisting of a triangle, a parallelogram, a trapezoid, and a rectangle.

9. The optical device according to claim 7, wherein the light-absorbing layer includes a black light-absorbing coating or a fluff light-absorbing coating.

10. The optical device according to any one of claims 4-6, wherein the base plate includes a housing with an accommodating cavity extending from an upper side of the base plate, the display unit is installed in the accommodating cavity, and a bottom of the accommodating cavity communicates with the lens-mounting hole.

11. The optical device according to claim 10, wherein the display unit includes a display screen and a fixing frame; the display screen is wrapped by the fixing frame; one end of the fixing frame covers the gap between the third side-surface and the lens, and the other end covers the gap between the fourth side-surface and the lens.

12. The optical device according to claim 10, wherein the top of the housing is provided with a mounting opening, and the mounting opening is provided with a sealing cover.

13. The optical device according to claim 1, wherein the first side-surface is provided with a first portion and a second portion which are connected with each other, the first portion and the lens are installed and connected in cooperation with each other, and the second portion is provided with a concave structure for eliminating stray light.

14. An optical module for a head-mounted display apparatus, comprising: two optical devices according to any one of claims 1-13, and a connecting portion; wherein the two optical devices are symmetrically arranged along the connecting portion and connected through the connecting portion.
